# EUROPEAN PATENT SPECIFICATION

(11) **EP 0 442 927 B1**
(45) Date of publication and mention of the grant of the patent: **21.07.1993**
(21) Application number: 89912480.4
(22) Date of filing: 01.11.1989
(51) Int. Cl.: F16L 23/14

(54) **DUCT JOINTING DEVICES**
KANALVERBINDUNGSVORRICHTUNG
ELEMENTS DE JONCTION POUR CANALISATION

(30) Priority: 12.11.1988 GB 8826511
(43) Date of publication of application: 28.08.1991
(73) Proprietor: FIRMAC LIMITED, Scarborough, Yorkshire YO12 4HA (GB)
(72) Inventor: FIRTH, Colin Firmac Limited, Scarborough Yorkshire YO12 4HA (GB)
(74) Representative: Denmark, James
(86) International application number: GB8901300
(87) International publication number: WO9005263

(56) References cited:
- EP-A- 0 141 306
- EP-A- 0 151 075

## Description

The invention relates to duct jointing devices comprising corner pieces for introduction into hollow flanges.

It has long been recognised that an effective and, if necessary, essential air tight, joint between adjacent matching ends of polygonal sheet metal ducts can be provided by attaching to the end of each wall of each duct an elongate hollow flange, forming the flanges into rigid frames by introducing the respective arms of rigid L-shaped corner pieces endwise into the open ends of each pair of adjacent hollow flanges associated with each duct, and joining together adjacent pairs of corner pieces associated with the respective ducts.

The corner pieces not only provide means for the securing of the respective ducts together but also ensure, by their rigid connection within the flanges, that the corners of the duct ends are maintained at their correct angles which are commonly, though not necessarily, right angles.

European Patents EP-A-0141306 and EP-A-0151075 disclose methods for forming corner pieces for joining ductwork however in both cases the said corner pieces are formed from parts which differ in size and configuration. This is inconvenient and produces additional manufacturing costs in addition to requiring that during asssembly equal amounts of each part are kept in stock.

Furthermore, with one-piece corner pieces conventionally used in known devices, it is necessary to assemble the frame remotely from the end of the duct and then carry the frame to the duct end for attachment thereto. The transportation of frames to the attachment site presents difficulties particularly if the frame is of large dimensions, and it is an object of the present invention to alleviate this difficulty.

According to the invention there is provided a duct jointing device comprising two separate legs in a form to be assembled together to form a rigid L-shaped corner piece for associating with hollow flanges, and wherein the corner piece comprises two leg bodies overlapping at their ends to form a corner body, characterised in that the two leg bodies comprising one corner piece are identical.

The legs may be at least substantially planar and may be capable of assembly by movement perpendicular to said plane.

Embodiments of the invention will now be described by way of example and with reference to the accompanying drawings of which:-
Figure 1 is a perspective view of one end of a rectangular duct partially equipped with means for securing that end to an end of a matching duct;
Figure 2 is an isometric view of a whole duct flange;
Figure 3 is an exploded isometric view of overlapping leg elements capable of assembly to form a rigid L-section corner piece;
Figure 4 is a plan view of the assembled corner piece; and
Figure 5 is a side elevation on one of the leg elements of Figure 4.

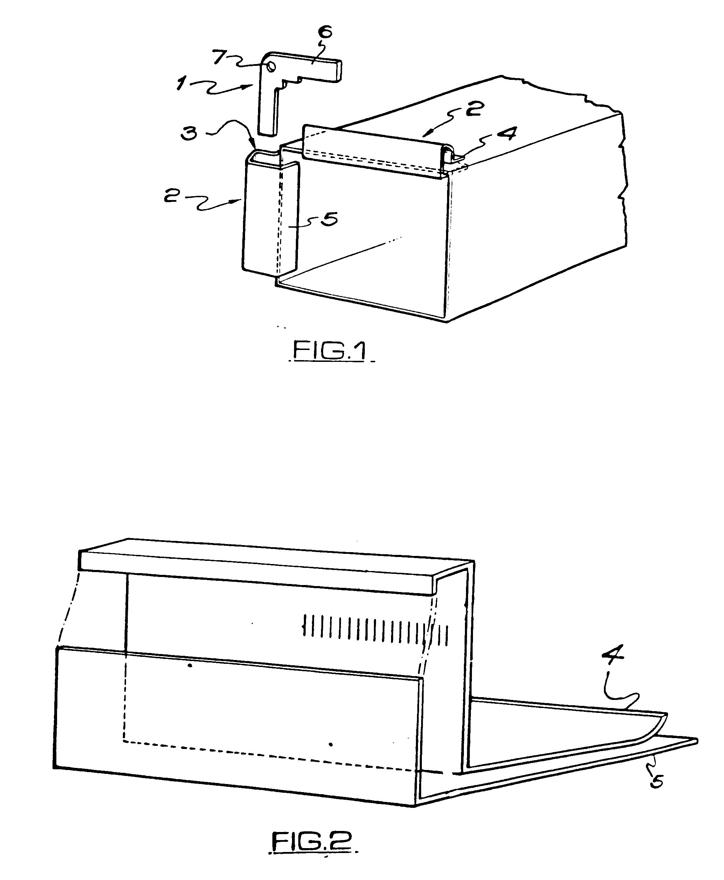

The invention relates to means for securing together the ends of sheet metal ducts, such as the square duct shown in Figure 1, though the invention is applicable to any polygonal-sectioned duct. The Figure also shows, in part, means conventionally employed for securing the ends of ducts together, such means comprising a corner piece 1, and a pair of hollow flanges 2.

Each of the flanges 2 comprises a strip of sheet metal somewhat shorter than the width of the duct and folded through 180° widthwise to form an open rectangular loop 3 and also through 90° to provide upper 4 and lower 5 duct-engaging limbs. The flanges are attached to the ducts by sliding them onto the walls of the ducts at their ends with the limb 5 on the inner side of the wall and the limb 4 exterior of the wall as shown in Figure 1, and then securing the flange to the wall in any conventional manner. The flange 2 can be seen in Fig. 1 to have a hollow section into which one of the corner portion legs 6 fits.

The corner piece 1 conventionally comprises a corner portion from which legs 6 project at angles corresponding to the interior angles of the duct, in the example 90°. Each of the legs is of such dimensions that it may be introduced into the open loop 3 of a respective one of a pair of adjacent flange pieces, and to be a tight fit therein, so that the flange pieces are held together substantially rigidly at the angle of the corner piece. A complete duct jointing frame comprises a number of corner pieces and a number of flange pieces each corresponding to the number of sides to the duct.

In the jointing devices hitherto described, it has been necessary to assemble together the corner pieces and the flange pieces into a closed and substantially rigid frame remote from the duct and to transport the frame to the duct for attachment thereto. This is because each leg is required to be introduced into the flange piece lengthwise of the leg, and this has necessitated relative movement between the corner piece and angularly disposed flange pieces, which movement could not be accommodated with the flange pieces already in situ as shown in Figure 1.

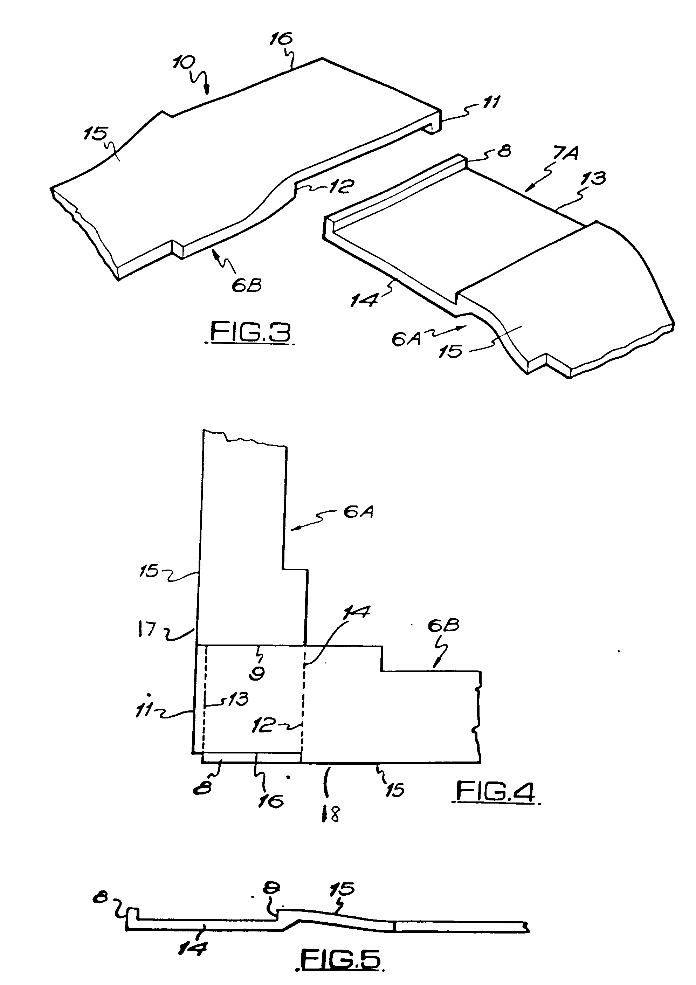

As shown in Figures 3 and 4, however, the corner piece of the invention has separable leg elements 6A and 6B adapted to be joined together as a half-lap joint. To this end the leg element 6A is provided with a corner portion 7 having a terminal flange 8 and an opposed parallel shoulder 9 between which to accommodate, in face to face relationship, a corner portion 10 of the leg element 6B. Similarly, the corner portion 10 has a flange 11 and an opposed shoulder 12 for engagement respectively with the edges 13 and 14 of the portion 7 when the respective corner pieces are brought together face to face. The edge 13 of leg element 6A and the corresponding edge 16 of leg element 6B are set back from the general lines 17, 18 of the leg elements in order to accommodate the terminal flanges.

As will be appreciated from Figure 5, each leg element comprises material of substantially constant thickness and may be made, for example from sheet metal, with a single pressing operation. When assembled, the corner piece thus constitutes a corner body comprising the portions 7 and 10 in face to face relationship, and extending from the said body a pair of legs, suitably oriented with respect to one another, and of half the thickness of the corner body. In order that the two legs are co-planar in the assembled corner piece, each of the elements 6A and 6B has a curved portion 15 inclined in the opposite direction to the projection of its terminal flange.

It is particularly advantageous if the two leg elements are identical, rather than handed, so that both can be manufactured by the same pressing tool.

## Claims

1. A duct jointing device comprising two separate legs (6a,6b) in a form allowing assembly together to form a rigid L-shaped corner piece (1) for associating with hollow flanges (2), and wherein the corner piece (1) comprises two leg bodies (6a,6b) overlapping at their ends to form a corner body, characterised in that the two leg bodies (6a,6b) comprising one corner piece (1) are identical.

2. A duct jointing device according to Claim 1, characterised in that each leg body (6a,6b) where it overlaps with the other leg body has a channel rebate enabling the two leg bodies (6a,6b) to overlap and interfit.

3. A duct jointing device according to Claim 1 or 2, characterised in that the legs (6a,6b) are at least substantially planar and are capable of assembly by movement perpendicular to said plane.

4. A duct section wherein each end of each wall is equipped with a hollow flange (2), characterised in that adjacent flanges (2) are connected by duct jointing devices (1) according to any of Claims 1 to 3.

5. A duct formed from at least two duct sections according to Claim 4, characterised in that said sections are placed end to end with duct jointing devices (1) of each section being connected to duct jointing devices (1) of adjacent sections so that the sections are joined to each other.

## Patentansprüche

1. Eine Kanalverbindungsvorrichtung die zwei einzelnen Schenkel (6a, 6b) umfasst von einer Form die die Zusammensetzung zu einem starren L-förmigen Eckstück (1) zur Verbindung mit hohlen Flanschen (2) erlaubt, und worin das Eckstück (1) zwei Schenkelkörper (6a, 6b) umfasst, deren Ende sich überlappen um einen Eckkörper zu bilden, dadurch gekennzeichnet dass die zwei Schenkelkörper (6a, 6b), die ein Eckstück (1) ausmachen, identisch sind.

2. Eine Kanalverbindungsvorrichtung nach Anspruch 1, dadurch gekennzeichnet dass jeder Schenkelkörper (6a, 6b) an der Überlappungsstelle mit dem anderen Schenkelkörper eine Kanalauskehlung hat, die die Überlappung und das Zusammenpassen der zwei Schenkelkörper (6a, 6b) erlaubt.

3. Eine Kanalverbindungsvorrichtung nach Anspruch 1 oder 2, dadurch gekennzeichnet dass die Schenkel (6a, 6b) zum mindesten erheblich plan sind und mittels senkrechter Bewegung zu der genannten Ebene zusammensetzungsbar sind.

4. Ein Kanalabschnitt worin jedes Ende jeder Wand mit einem-hohlen Flansch (2) versehen ist, dadurch gekennzeichnet dass benachbarte Flansche (2) durch Kanalverbindungsvorrichtungen (1) nach einem der Ansprüche 1 bis 3 verbunden sind.

5. Ein Kanal der von mindestens zwei Kanalabschnitte nach Anspruch 1 gebildet ist, dadurch gekennzeichnet dass die genannten Abschnitte Ende gegen Ende gebracht sind und Kanalverbindungsvorrichtungen (1) von jedem Abschnitt mit Kanalverbindungsvorrichtungen (1) benachbarter Abschnitte verbunden sind, damit die Abschnitte miteinander verbunden werden.

## Revendications

1. Elément de jonction pour canalisation comprenant deux jambes séparées (6A, 6B) sous une forme permettant de les assembler pour former une pièce de coin rigide (1) en L, destinée à être associée avec des brides creuses (2), et dans lequel la pièce de coin (1) comprend deux corps de jambes (6A, 6B) se recouvrant à leurs extrémités pour former un corps de coin, caractérisé en ce que les deux corps de coin (6A, 6B) comprenant une pièce de coin (1) sont identiques.

2. Elément de jonction pour canalisation suivant la revendication 1, caractérisé en ce que chaque corps de jambe (6A, 6B) là où elle recouvre l'autre corps de jambe comporte une feuillure permettant aux deux corps de jambe (6A, 6B) de se recouvrir et de s'adapter mutuellement.

3. Elément de jonction pour canalisation suivant la revendication 1 ou 2, caractérisé en ce que les jambes (6A, 6B) sont au moins sensiblement planes et peuvent être assemblées par un mouvement perpendiculaire audit plan.

4. Portion de canalisation dans laquelle chaque extrémité de chaque paroi est équipée d'une bride creuse (2), caractérisé en ce que les brides (2) adjacentes sont reliées par des éléments de jonction pour canalisation (1) suivant l'une des revendications 1 à 3.

5. Canalisation formée d'au moins deux portions de canalisation suivant la revendication 4, caractérisé en ce que lesdites portions sont placées bout à bout, les éléments de jonction pour canalisation (1) de chaque' portion étant reliés aux éléments de jonction pour canalisation (1) des portions adjacentes de sorte que les portions sont reliées les unes aux autres.
